# EUROPEAN PATENT APPLICATION

(11) **EP 3 165 444 A1**
(43) Date of publication of application: **10.05.2017**
(21) Application number: 15193712.5
(22) Date of filing: 09.11.2015
(51) Int. Cl.: B64C 1/14

(54) **AIRCRAFT DOOR ASSEMBLY**

(71) Applicant: Airbus Operations GmbH, 21129 Hamburg (DE)
(72) Inventor: ERBEN, Johann Konrad, 21129 Hamburg (DE)
(74) Representative: Isarpatent

(57) **Abstract**

A door assembly (10), particularly for doors of passenger aircraft, includes a door frame, a door having a door body (1), a guiding rail (15) mounted at a side beam of the door frame and extending vertically along the door frame, and a linkage mechanism (17) coupled between the door frame and the guiding rail. The linkage mechanism is configured to retract and extend the guiding rail perpendicular to the vertical extension of the guiding rail along the door frame.

## Description

The present invention relates to a door assembly, specifically for inwardly opening plug-type overhead sliding aircraft doors, for example for use as overwing exits (OWE) in passenger aircraft.

Although the invention is explained and discussed in conjunction with a plug-type overhead sliding aircraft door, the principles of the invention may easily be transferred to other types doors as well, for example coach doors, trolleybus doors or train doors which employ a sliding mechanism to move a door body of the door substantially co-planar to the plane of the door frame to open the door.

Self-sealing doors such as coach doors, trolleybus doors, train doors or aircraft doors may employ so-called plug-type doors which are designed to seal itself in the door frame by taking advantage of a pressure difference, for example between an aircraft cabin on the inside and the atmosphere around the aircraft in flying altitude on the outside. The pressurization forces the door body into the door frame which may be inversely wedge-shaped or which may include stop members at or around the door jamb that match corresponding door stop members arranged around the outer circumference of the door body. The higher pressure on the inside exerts a force onto the seating of the door body within the door frame or onto the bearing surfaces of the corresponding stop members and retains the door within the door frame, preventing the door from springing open until after release of the pressure or other active deployment of the door.

In order to open those doors, the door body may be moved inwardly and then out of the way of the door frame so that unhindered passage through the door frame is possible without the door body blocking the way. The problem with those inwardly opening doors is that the door body needs to be temporarily moved out of the way, necessitating the allocation of some temporary storage space for the door body in the vicinity of the door frame. Additionally, there needs to be a guiding mechanism that allows the door body to be guided between the open and the closed position.

For example, document US 4,375,876 A discloses an overhead sliding aircraft door assembly that allows the door to be moved inwardly, raised upwardly and then stowed out of the way in an overhead position over the door frame in an overhead storage space. The door assembly employs guiding tracks and motion coupling means to guide the door body along a predetermined travel path between an open and a closed position.

There is, however, a need for improvements in inwardly opening door structures, particularly for aircraft, which require less installation space, are more convenient in operation and are able to withstand high loads during movement of the door body.

This need is met by a door assembly having the features of claim 1, an aircraft having the features of claim 9, and a method for operating a door assembly having the features of claim 11.

A first aspect of the disclosure pertains to a door assembly comprising a door frame, a door having a door body, a guiding rail mounted at a side edge the door frame and extending vertically along the door frame, and a linkage mechanism coupled between the door frame and the guiding rail. The linkage mechanism is configured to retract and extend the guiding rail perpendicular to the vertical extension of the guiding rail along the door frame.

According to a second aspect of the disclosure, an aircraft comprises a door assembly according to the first aspect of the disclosure, particularly for an overwing exit of the aircraft.

According to a third aspect of the disclosure, a method for operating a door assembly, particularly a door assembly according to the first aspect of the disclosure of an aircraft according to the second aspect of the disclosure, comprises actuating the linkage mechanism to move the guiding rail away from the door frame, and guiding the door body parallel of the door frame along the guiding rail.

The idea on which the present invention is based is to provide for a two-stage door opening mechanism which at first enables the door to be displaced inwardly out of the door frame. In a second stage, the inwardly displaced door is then slid upwards along the inner surface of the fuselage out of the way of the door exit, for example into an overhead storage compartment above the door frame. The two-stage mechanism is formed on one hand by a movable guiding rail that may be displaced inwardly out of the door frame. On the other hand, the door body is interlinked with the guiding rail in a prismatic joint with a guiding member attached to the door body so that the door may be slid upwards in a pure translatory motion the direction of which is restrained by the geometry of the guiding rail.

Additionally, the door assembly provides for an easy-to-operate sliding mechanism for an inward opening door with no need for additional pressure prevention. Due to the inwardly facing translatory motion when clearing the door, the transfer of circumferential loads into the fuselage is advantageously largely avoided. Moreover, both stages of motion (inwardly displaceing motion of the guiding rail for clearing the door and sliding the door for opening the door) may be power-assisted separately with separate assistance mechanisms. The need to use structurally complex kinematic chains with multiple degrees of freedom in movement is thereby obviated.

Finally, the clearance space required for the two-stage door opening mechanism may be completely stowed away within the door frame so that the installation and operation of the door assembly may advantageously be implemented in a space-saving manner.

According to an embodiment of the door assembly, the door assembly may further comprise a guiding member attached to a guiding member connector, the guiding member being formed corresponding to a receiving section of the guiding rail and the guiding member connector being fixedly connected to the door body. According to a specific embodiment of the door assembly, this guiding member may comprise a guiding wheel which is configured to be displaced along the guiding rail in a rotary motion in a rotary motion around an axis of extension of the guiding member connector. Guiding wheels rolling within guiding rail tracks offer very little friction, thereby reducing the power efforts needed to open the door.

According to yet another embodiment of the door assembly, the door assembly may further comprise a guiding rail closure which may be pivotably attached to the guiding rail and configured to enclose the guiding member in clasping engagement within the guiding rail. The pivotable guiding rail closure may advantageously assist in securely receiving the guiding member within a joint channel of the guiding rail, even when the guiding member may be fully or at least partially removed from the guiding rail for tight closing of the door within the door frame.

According to another embodiment of the door assembly, the receiving section of the guiding rail may be substantially U-shaped.

According to yet another embodiment of the door assembly, the door assembly may further comprise an overhead storage compartment arranged over the door frame, and a compartment rail extending vertically into the overhead storage compartment. The linkage mechanism may in this case be configured to bring the guiding rail into alignment with the compartment rail. Such OSCs may be integrated into the cabin of a passenger aircraft and covered with interior cabin lining panels to hide the open door from sight. The alignment of the guiding rail and the compartment rail may advantageously provide for a track system that allows a greater range of movement of the door body in a seamless manner.

According to another embodiment of the door assembly, the door assembly may further comprise a fuselage fairing, and a fuselage load bearing beam fixedly attached to the door frame, the guiding rail being mounted to the fuselage load bearing beam and being spaced apart from the fuselage fairing by a clearance distance by means of the fuselage load bearing beam.

According to another embodiment of the door assembly, the door assembly may further comprise a clutch mechanism coupled to the guiding rail and configured to engage with the guiding member to temporarily lock the guiding member with the guiding rail.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates a door body of an aircraft door assembly according to an embodiment of the invention.
Fig. 2 schematically illustrates a top view of two operational states of an inwardly opening aircraft door according to a further embodiment of the invention.
Fig. 3 schematically illustrates a top view of two operational states of an inwardly opening aircraft door according to a further embodiment of the invention.
Fig. 4 schematically illustrates a top view of three operational states of an inwardly opening aircraft door according to yet another embodiment of the invention.
Fig. 5 schematically illustrates a side view of an aircraft door assembly according to a further embodiment of the invention.
Fig. 6 schematically illustrates the side view of the aircraft door assembly of Fig. 5 in a partially opened operational state.
Fig. 7 schematically illustrates stages of a method for operating an aircraft door assembly according to another embodiment of the invention.
Fig. 8 schematically illustrates an aircraft having at least one aircraft door assembly according to yet a further embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

The following detailed explanation is directed towards door assemblies for use in aircraft, such as overwing exits (OWE) in passenger aircraft, but the guiding principles of the invention may be used for other applications as well, such as door assemblies for coaches, trolleybuses or trains, either.

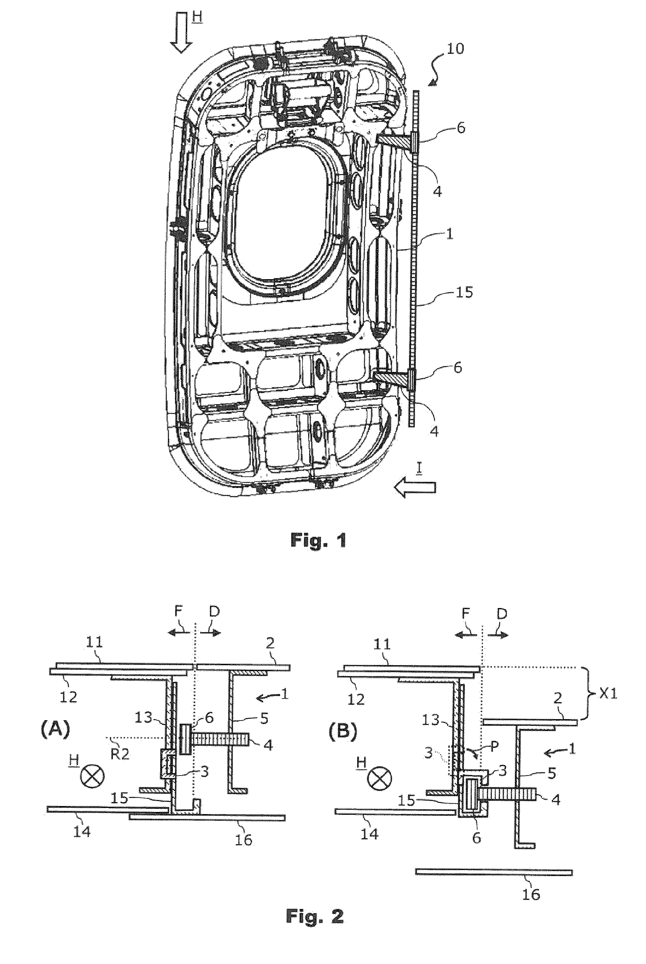

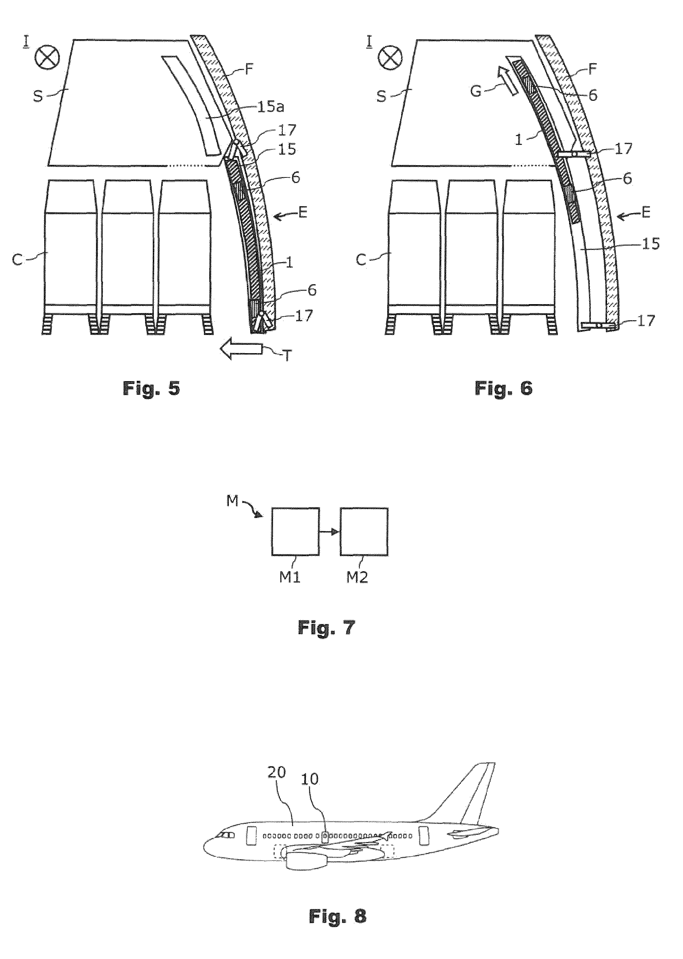

Fig. 1 shows a schematic illustration of a door assembly 10 as it may be employed in an aircraft, particularly a passenger aircraft. The view on the door assembly 10 is exemplarily shown as seen from the inside of a cabin in a passenger aircraft. Fig. 8 exemplarily depicts an aircraft 20 comprising such a door assembly 10 as explained and described in conjunction with Figs. 1 to 6. The door assembly 10 may be used as overwing exit (OWE) in passenger aircraft, but it may be equally possible to equip other exits of the aircraft 20 with the door assemblies 10 as well.

Figs. 2, 3 and 4 each show a top view - generally indicated with the reference sign "H" - on a border area between the door frame and the door of Fig. 1. As denoted with the reference signs "F" and "D" in Figs. 2, 3 and 4, the left hand side of the illustrations shows the fuselage portion F of the door assembly 10 and the right hand side of the illustrations shows the door portion D of the door assembly 10. The fuselage portion F may include a hull or skin of an aircraft with a fuselage fairing panel 11 on the outside and a fuselage lining panel 12 on the inside of the fuselage. Attached to the fuselage, a fuselage load bearing beam 13 may be attached to the fuselage structure forming the frame or part of the frame of the door. An interior lining panel 14 such as a passenger cabin lining panel 14 may be arranged spaced apart from the hull by the fuselage load bearing beam 13. The lining panel 14 may be part of a cladding structure that hides the functional components of the fuselage from sight and undesired access by passengers.

The door assembly 10 generally includes a door having a door body 1 that is installed in a door frame. As schematically indicated in Fig. 1, the door frame comprises a guiding rail 15 mounted at a side edge the door frame. The guiding rail 15 extends vertically along the door frame, i.e. from the bottom of the door to the top of the door and possibly further ahead over the height of the door body 1. As can be best seen in Fig. 2, the guiding rail 15 may for example be an elongated bar or track with constant section along the extension of the rail. Of course, guiding rails 15 may be formed on both sides of the door body 1 and the door frame, respectively, but in Fig. 1 only a single guiding rail 15 is depicted for reasons of lucidity.

A guiding member 6 may be insertable into the guiding rail 15. In order to secure the guiding member against slipping out of the guiding rail 15 perpendicular to the extension of the guiding rail 15, the U-section of the rail may be formed with inwardly folded end flanges that secure the guiding member 6 within the guiding rail 15. The guiding member 6 and the guiding rail 15 together form a prismatic joint, i.e. the guiding member 6 is received in the guiding rail 15 and movable relative to the guiding rail 15 only in the direction of extension of the rail. The guiding member 6 may for example comprise a guiding wheel 6 which is configured to be displaced along the guiding rail 15 in a rotary motion.

The guiding member 6 is attached to a guiding member connector 4 which in turn is fixedly connected to the door body 1. If the guiding member 6 is formed as a guiding wheel 6, the guiding member connector 4 may be attached at a center axis R2 of the guiding wheel 6, allowing for rotary motion of the guiding wheel 6 around the center axis R2.

Fig. 2 depicts two scenarios (A) and (B) of operational states of the door assembly 10: In the first operational state of scenario (A), the door body 1 is fully inserted into the door frame and may be considered as being in a locked state. In the second operational state of scenario (B), the door body 1 is partially unlatched and cleared from the door frame in an inward displacement.

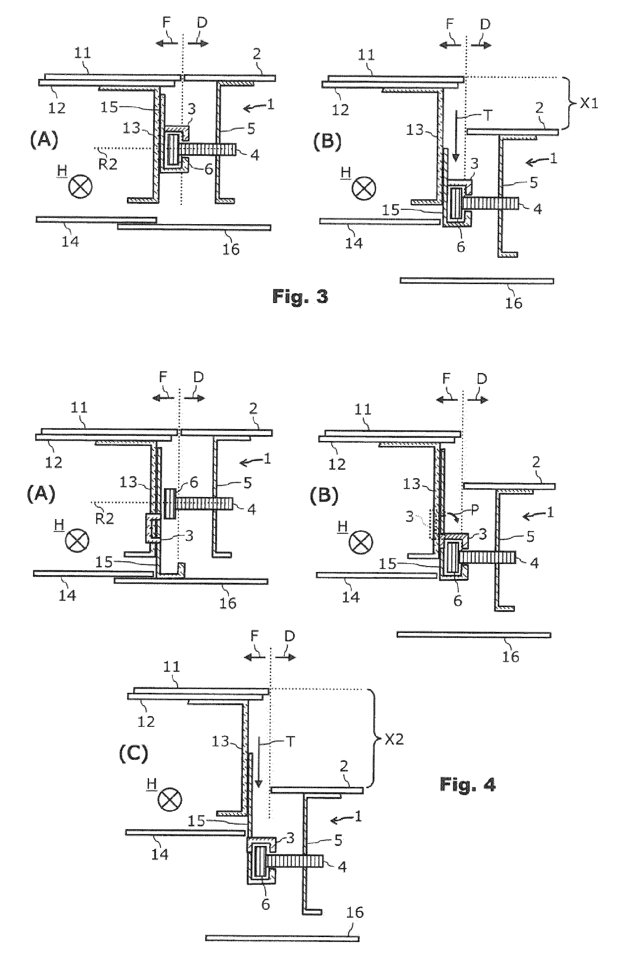

Similarly, Fig. 3 depicts two scenarios (A) and (B) of operational states of the door assembly 10: In the first operational state of scenario (A), the door body 1 is fully inserted into the door frame and may be considered as being in a locked state. In the second operational state of scenario (B), the door body 1 is partially unlatched and cleared from the door frame in an inward displacement.

In both Fig. 2 and 3, the inward displacement of the door body 1 towards the second operational state leads to a clearance distance X1 of the door body 1 relative to the door frame.

Fig. 4 depicts three scenarios (A), (B) and (C) of operational states of the door assembly 10: In the first operational state of scenario (A), the door body 1 is fully inserted into the door frame and may be considered as being in a locked state. In the second operational state of scenario (B), the door body 1 is partially unlatched and cleared from the door frame in an inward displacement. In the third operational state of scenario (C), the door body 1 is further displaced inwardly away from the door frame, thereby leading to an even greater clearance X2 than the clearance distance X1 of Figs. 2 and 3.

As shown in Fig. 2(A), the guiding member 6 is at first removed from a receiving section at the head end of the guiding rail 15. To that end, the guiding rail 15 may be provided with a guiding rail closure 3 which is pivotably attached to the guiding rail 15. In the removed state of the guiding member 6, the guiding rail closure 3 is pivoted out of the way of the range of motion of the guiding member 6, thereby forming an opening of the receiving section of the guiding rail 15 through which the guiding member 6 may be transferred in and out of the guiding rail 15. As shown in Fig. 2(A), the guiding rail closure 3 may be pivoted downwards in a pivoting motion P to enclose the guiding member 6 in clasping engagement within the guiding rail. The distance of the guiding rail 15 with respect to the door frame may be selected such that the range of motion of the guiding member 6 into the receiving section of the guiding rail 15 allows the door body 1 to be displaced inwardly by a clearance distance denoted with the reference sign "X1" in Fig. 2(B).

As shown in Fig. 3(A), it may also be possible to have the guiding member 6 at first being received in the receiving section at the head end of the guiding rail 15. Instead of only moving the guiding member 6 inwardly, the guiding rail 15 and guiding member 6 may be moved together in a translatory inward motion, denoted by the reference sign "T". to that end, the guiding rail 15 may be fixed to the door frame with a linkage mechanism which is explained and shown in more detail in conjunction with Figs. 5 and 6 below.

The guiding rail closure 3 may again be pivotably attached to the guiding rail 15, but may also be integrally formed with the guiding rail 15 and kept in fixed geometry. As shown in Fig. 3(A), the guiding rail closure 3 encloses the guiding member 6 in clasping engagement within the guiding rail 15 so that the translatory motion T displaces the guiding rail 15 and concomitantly the door body 1 with respect to the door frame inwardly by a clearance distance denoted with the reference sign "X1" in Fig. 3(B).

Both movement mechanisms may be combined as shown in Fig. 4 to achieve an even larger clearance distance as denoted with the reference sign "X2" in Fig. 4(C). At first, as shown in Fig. 4(A), a first part of the clearance distance is gained by moving the guiding member 6 into the receiving section of the guiding rail 15. Then, after closing the guiding rail closure 3 in a pivoting motion P as shown in Fig. 4(B), the guiding rail 15 along with the now enclosed and received guiding member 6 is transferred inwardly in a translatory motion T. As illustrated in Fig. 4(C), the clearance distance X2 gained from the combined displacement mechanisms may be larger than the clearance distances X1 of Fig. 2 and 3 that may be gained by the two different displacement mechanisms alone.

In order to have the cleared door stowed away from the door frame and to vacate an exit E through the door frame, the door body 1 may be guided in a substantially linear motion away from the door frame. To that end, Figs. 5 and 6 depict two different stages for the movement of the door from the closed state into a stowage position. Fig. 5 shows the locked and closed door in a side view, generally denoted with the reference sign "I". After the initial translatory displacement of the door body 1 and the corresponding translatory inward motion T of the guiding rail 15, Fig. 6 illustrates the cleared operational state of the door assembly 10 in which the door body 1 has been partially slid upwards along the inwardly tilted guiding rail(s) 15 towards a stowage position, for example in an overhead stowage compartment (OSC), generally indicated with the reference sign "S". The inside of the cabin may contain cabin equipment C, such as for example passenger seats. The fuselage section with the door frame is generally denoted with the reference sign "F".

The linkage mechanism 17 of the door assembly is exemplarily illustrated as a 2-bar kinematic chain consisting of two straight links connected by a revolute joint in the center. The 2-bar linkage may be angled at the center joint to retract the guiding rail 15 - and therefore the door body 1 - into the door frame. When being stretched out, the 2-bar linkage may extend the guiding rail 15, and concomitantly the door body 1, away from the door frame into a cleared operational state. There are exemplarily shown two linkage mechanisms 17, one at the bottom and one at the top of the door body 1. However, it should be understood that more or less than one linkage mechanisms 17 may be provided at various heights along the edges of the door body 1.

The linkage mechanisms 17 may also be formed differently, for example by a winch mechanism with a retractable cord pulley, by a pneumatically or hydraulically actuated piston system or by a cam-type mechanism. Irrespectively of the type of linkage mechanism 17 used, the linkage mechanism 17 may be power-assisted, for example by a torsion spring, an external spring or by a biased overcenter mechanism.

The OSC S may be arranged over the door frame and comprise a compartment rail 15a that forms a section of a guiding track system. The guiding rail 15 may be brought into alignment with the compartment rail 15a so that the guiding members 6 may be seamlessly transferred from the guiding rail 15 into the compartment rail 15a, thereby providing a smooth and continuous guiding motion G of the door body 1 from the cleared operational state side-by-side to the door frame towards a stowage position within OSC S. The door body 1 may be fully or at least partially received within the OSC S to fully unblock the exit E through the door frame and to hide the door body 1 from sight and unwarranted access in the open state.

During aforementioned translatory inward motion T of the guiding rail 15, i.e. to bring the door assembly from the closed operational state in Fig. 5 to a cleared operational state, the guiding member 6 should be kept in place relative to the guiding rail 15. To that end, a clutch mechanism may be coupled to the guiding rail 15. This clutch mechanism may be configured to engage with the guiding member 6 to temporarily lock the prismatic joint of the guiding member 6 and the guiding rail 15. For example, the clutch mechanism may include a retractable pin that may be extended through a hole in the guiding rail 15 into an axial bearing of the guiding member 6 to interlock the guiding rail 15 and the guiding member 6. Alternatively, it may be possible to block the vertical movement of the guiding member 6 within the guiding rail 15 by stop elements that may be extended into the channel of the guiding rail 15 in front of and behind the guiding member 6.

When the door body 1 has been cleared, the clutch mechanism may be released and the guiding member 6 may freely be translated along the guiding rail 15, as indicated by the reference sign "G". As shown in Fig. 5, the door body 1 may be slid upwards into the OSC S along the guiding rails(s) 15 and possibly further along the compartment rail(s) 15a. The translator guiding motion G may be power-assisted by an appropriate powertrain, for example a hydraulic, pneumatic or electric powertrain. The power-assisted mechanism may for example comprise an electrically operated winch with a cable being attached to an upper edge of the door body and wound-up on the winch to pull the door body 1 upwards along the guiding rail(s) 15 and compartment rail(s) 15a.

Fig. 7 schematically illustrates stages of a method M for operating a door assembly, for example a door assembly 10 as explained in conjunction with Figs. 1 to 6. The method M may be specifically used for operating door assemblies 10 on board of an aircraft, such as the aircraft 20 as depicted in Fig. 8. The method M may in particular be used to open a closed door of a door assembly 10.

In a first stage M1, the method M involves actuating the linkage mechanism 17 to move the guiding rail 15 away from the door frame, particularly inwardly towards the cabin area of the aircraft. Then, in a second stage M2, the door body 1 is moved upwards in a guiding motion G parallel to the door frame. This guiding motion G may be power-assisted and may involve guiding the guiding member 6 within the guiding rail 15. The door body 1 may advantageously be moved out of the way of an exit area E of the aircraft, for example into an overhead storage compartment S.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- 1: Door body
- 2: Door fairing
- 3: Guiding rail closure
- 4: Guiding member connector
- 5: Door load bearing beam
- 6: Guiding member
- 10: Door assembly
- 11: Fuselage fairing
- 12: Fuselage lining
- 13: Fuselage load bearing beam
- 14: Cabin lining
- 15: Guiding rail
- 15a: Compartment rail
- 16: Door lining
- 17: Guiding rail linkage
- 20: Aircraft
- C: Cabin equipment
- D: Door portion
- E: Exit area
- F: Fuselage portion
- G: Guiding motion
- H: Top viewing direction
- I: Side viewing direction
- P: Pivoting motion
- M: Method
- M1: Method step
- M2: Method step
- R2: Axis of revolution
- S: Overhead storage compartment
- T: Translatory motion
- X1: First clearance
- X2: Second clearance

## Claims

1. Door assembly (10), comprising:
a door frame;
a door having a door body (1);
a guiding rail (15) mounted at a side edge the door frame and extending vertically along the door frame; and
a linkage mechanism (17) coupled between the door frame and the guiding rail (15), the linkage mechanism being configured to retract and extend the guiding rail (15) perpendicular to the vertical extension of the guiding rail (15) along the door frame.

2. Door assembly (10) according to claim 1, further comprising:
a guiding member (6) attached to a guiding member connector (4), the guiding member (6) being formed corresponding to a receiving section of the guiding rail (15) and the guiding member connector (4) being fixedly connected to the door body (1).

3. Door assembly (10) according to claim 2, wherein the guiding member (6) comprises a guiding wheel (6) which is configured to be displaced along the guiding rail (15) in a rotary motion around an axis of extension (R2) of the guiding member connector (4).

4. Door assembly (10) according to one of the claims 2 and 3, further comprising:
a guiding rail closure (3) which is pivotably attached to the guiding rail (15) and
configured to enclose the guiding member (6) in clasping engagement within the guiding rail.

5. Door assembly (10) according to one of the claims 2 to 4, wherein the receiving section of the guiding rail (15) is substantially U-shaped.

6. Door assembly (10) according to one of the claims 2 to 5, further comprising:
a clutch mechanism coupled to the guiding rail (15) and configured to engage with the guiding member (6) to temporarily lock the guiding member (6) with the guiding rail (15).

7. Door assembly (10) according to one of the claims 1 to 6, further comprising:
an overhead storage compartment (S) arranged over the door frame; and
a compartment rail (15a) extending vertically into the overhead storage compartment (S),
wherein the linkage mechanism (17) is configured to bring the guiding rail (15) into alignment with the compartment rail (15a).

8. Door assembly (10) according to one of the claims 1 to 7, further comprising:
a fuselage fairing (11); and
a fuselage load bearing beam (13) fixedly attached to the door frame, the guiding rail (15) being mounted to the fuselage load bearing beam (13) and being spaced apart from the fuselage fairing (11) by a clearance distance by means of the fuselage load bearing beam (13).

9. Aircraft (20), comprising an aircraft door with a door assembly (10) according to one of the claims 1 to 8.

10. Aircraft (20) according to claim 9, wherein the aircraft door is an overwing exit.

11. Method (M) for operating a door assembly (10), the door assembly (10) comprising:
a door frame;
a door having a door body (1);
a guiding rail (15) mounted at a side edge the door frame and extending vertically along the door frame; and
a linkage mechanism (17) coupled between the door frame and the guiding rail (15), the linkage mechanism being configured to retract and extend the guiding rail (15) perpendicular to the vertical extension of the guiding rail (15) along the door frame,
the method comprising:
actuating (M1) the linkage mechanism (17) to move the guiding rail (15) away from the door frame; and
guiding (M2) the door body (1) parallel of the door frame along the guiding rail (15).
